## Europäisches Patentamt

## European Patent Office

## Office européen des brevets

(11) Veröffentlichungsnummer: **0 223 058**
**B1**

# EUROPÄISCHE PATENTSCHRIFT

(45) Veröffentlichungstag der Patentschrift:
**11.10.89**

(21) Anmeldenummer: **86114152.1**

(22) Anmeldetag: **13.10.86**

(51) Int. Cl.⁴: **F01N 3/28, B01J 35/04,**
**B23K 26/00**

(54) **Verfahren zum Löten von metallischen Katalysator-Trägerkörpern.**

(30) Priorität: **25.10.85 DE 3538080**

(43) Veröffentlichungstag der Anmeldung:
**27.05.87 Patentblatt 87/22**

(45) Bekanntmachung des Hinweises auf die Patenterteilung:
**11.10.89 Patentblatt 89/41**

(84) Benannte Vertragsstaaten:
**AT BE CH DE FR GB IT LI LU NL SE**

(56) Entgegenhaltungen:
**EP-A- 0 049 489**
**DE-A- 2 736 313**

**WELDING JOURNAL,Band 59, Nr. 10, Oktober 1980, Seiten 267-277, Miami, Florida, US; C.E.WITHERELL et al.: "Laser brazing"**

(73) Patentinhaber: **INTERATOM Gesellschaft mit beschränkter Haftung, Friedrich-Ebert-Strasse, D-5060 Bergisch-Gladbach 1(DE)**

(72) Erfinder: **Maus, Wolfgang, Dipl.-Ing., Gut Horst, D-5060 Bergisch Gladbach(DE)**
Erfinder: **Kottmann, Rolf, Dr., Am langen Hahn 49, D-5253 Lindlar(DE)**
Erfinder: **Cyron, Theodor, Dipl.-Ing., Kurt-Schumacher-Strasse 12, D-5060 Bergisch Gladbach(DE)**
Erfinder: **Wieres, Ludwig, Dipl.-Ing. (FH), Oppeler Strasse 2, D-5063 Overath(DE)**

(74) Vertreter: **Mehl, Ernst, Dipl.-Ing. et al, Postfach 22 13 17, D-8000 München 22(DE)**

**Beschreibung**

Die vorliegende Erfindung betrifft ein Verfahren zur Herstellung von Katalysator-Trägerkörpern gemäß dem Oberbegriff des Anspruchs 1 sowie eine Vorrichtung zur Durchführung des Verfahrens.

Das Löten von metallischen Katalysator-Trägerkörpern ist beispielsweise aus der EP-B 0 049 489 bekannt und auch verschiedene Belotungstechniken sind Stand der Technik. Bisher wurden jedoch solche Katalysator-Trägerkörper immer nur in Lötöfen gelötet, da die verwendeten Materialien unter Schutzgas oder Vakuum erhitzt werden, um Oxydation zu vermeiden.

Aus der DE-C 2 727 967 und der DE-A 2 736 313 sind auch schon Verfahren zum Laserstrahlschweißen von Katalysator-Trägerkörpern bekannt. Solche geschweißten Verbindungen erfüllen jedoch nicht die hohen Ansprüche an die Zugfestigkeit, die bei den thermischen Wechselbelastungen eines Katalysator-Trägerkörpers verlangt werden. Aus einem Artikel 1 "Laser Brazing" von C. E. Witherell et al in "Welding Journal", Band 59, Nr. 10, Oktober 1980, Seiten 267–277, ist auch das Löten von z. B. dünnen Folien mittels Laser bekannt. Die speziellen Probleme des Hochtemperaturlötens von Katalysator-Trägerkörpern sind jedoch nicht angesprochen.

Aufgabe der vorliegenden Erfindung ist die Schaffung eines zur Herstellung von gelöteten, metallischen, wabenförmigen Katalysator-Tragerkörpern geeigneten Verfahrens, welches die Vorteile des Lötens mit denen des Laserschweißens verbindet und für fein strukturierte Wabenkörper angepaßt ist.

Zur Lösung dieser Aufgabe wird im Anspruch 1 vorgeschlagen, daß die Lötverbindungen an dem metallischen Katalysator-Tragerkörper durch Aufheizen der zu verlötenden Bereiche mittels Laserstrahlen hergestellt werden. Dieses Verfahren ist einerseits sehr schnell und erfordert einen viel geringeren apparativen Aufwand als das Hochtemperaturlöten im Vakuumofen. Dabei werden die Laserstrahlen auf mehr als die Wabenhöhe des Katalysator-Trägerkörpers defokussiert, wodurch ein auf eine Seitenfläche treffender Laserstrahl ohne genaue Justierung immer auch Berührungsstellen zwischen den einzelnen Blechlagen erfaßt. Außerdem werden die Laserstrahlen unter einem Winkel auf die Stirnseiten des Katalysator-Trägerkörpers gerichtet. Dadurch läßt sich die Tiefe der vom Laserstrahl erfaßten Bereiche einstellen, und somit auch die Größe des zu verlötenden Bereiches. Dabei ist zu berücksichtigen, daß die Laserstrahlen teilweise von den Metallblechen reflektiert werden, und somit noch tiefer in die einzelnen Kanäle des Katalysator-Trägerkörpers eindringen, sofern ein entsprechender Einfallswinkel gewählt wird. Ein besonderer Vorteil des Verfahrens ist, daß ohne Schutzgas oder Vakuum gelötet werden kann.

In weiterer Ausgestaltung der Erfindung wird in Anspruch 2 vorgeschlagen, daß die Katalysator-Trägerkörper vor dem Wickeln bzw. Schichten in an sich bekannter Weise belotet und beim Wickeln bzw. Schichten oder danach gelötet werden, wobei jeweils nur wenige Berührungsstellen gleichzeitig gelötet werden. Während das Beloten vor dem Aufwickeln, bei dem sich Lot zwischen den einzelnen Lagen einklemmt, beim bisherigen Löten als nachteilig erwiesen hat, weil das gleichzeitige Aufschmelzen aller Lotschichten zu unerwünschten Formveränderungen führt, tritt dieser Nachteil bei dem erfindungsgemäßen Verfahren nicht mehr auf. Es können daher alle aus dem Stand der Technik bekannten Belotungsverfahren vor oder beim Wickeln bzw. Schichten angewendet werden.

Andererseits kann gemäß Anspruch 3 auch ein Katalysator-Trägerkörper in an sich bekannter Weise nach dem Wickeln oder Schichten an den Seiten, gegebenenfalls selektiv, belotet und anschließend verlötet werden. Entsprechende Belotungstechniken sind beispielsweise in der EP-A 0 136 514 oder in der DE-A 3 529 654 beschrieben.

Gemäß Anspruch 4 ist es auch möglich, die Seiten des Katalysator-Trägerkörpers und die Laserstrahlen beim Löten relativ zueinander zu bewegen, so daß zumindest Teilbereiche der Seitenflächen von den Laserstrahlen überstrichen und die dortigen Berührungsstellen verlötet werden. Dies ist ein besonders einfaches Verfahren, was keine besonderen Justiereinrichtungen und sonstigen Steuerungen des Lasers benötigt.

Ausführungsbeispiele der Erfindung sind schematisch in der Zeichnung dargestellt, und zwar zeigen

Figur 1 in schematischer, perspektivischer Darstellung den Wickelvorgang beim Herstellen eines Katalysator-Trägerkörpers und die Einwirkmöglichkeiten von Laserstrahlen,

Figur 2 einen Ausschnitt aus der Stirnseite eines Katalysator-Trägerkörpers zur Verdeutlichung der Einwirkfläche eines Laserstrahles und

Figur 3 den schematischen Aufbau einer Belotungs- und Wickelvorrichtung mit den Einwirkmöglichkeiten für Laserstrahlen.

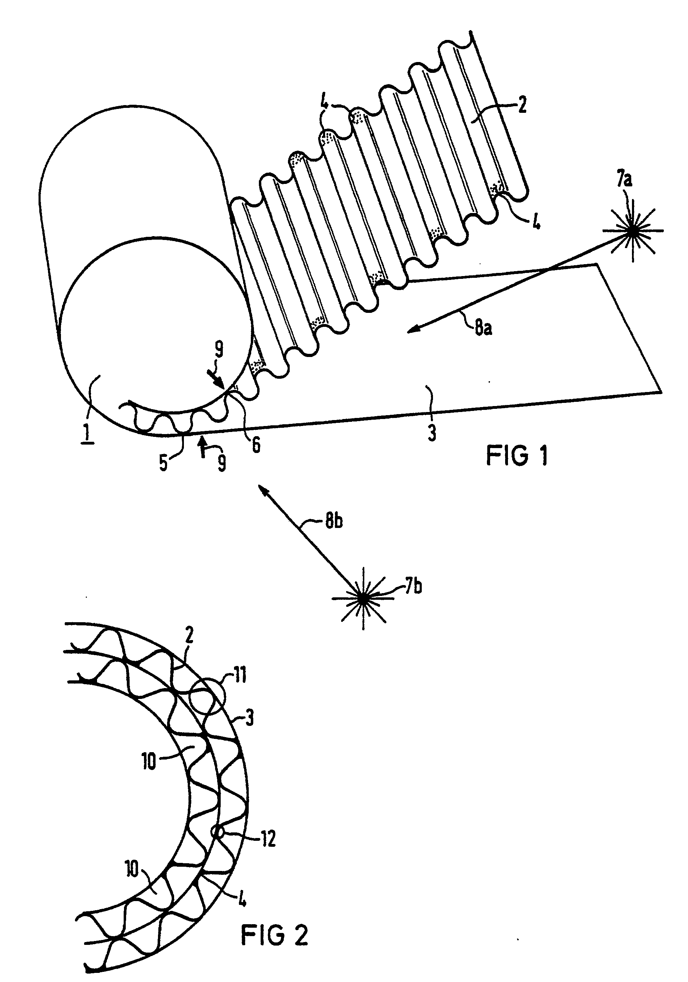

Figur 1 zeigt in schematischer Darstellung einen teilweise aufgewickelten Katalysator-Trägerkörper 1, der aus einem gewellten 2 und einem glatten 3 Blechstreifen besteht. Vor dem Aufwickeln können bestimmte Bereiche 4 auf den Wellen des gewellten Blechstreifens 2 mit Lot versehen werden, beispielsweise unter Verwendung eines Haftklebers, wie dies nach dem Stand der Technik bekannt ist. Beim Aufwickeln berühren sich die Blechstreifen an den durch Pfeile 9 gekennzeichneten Berührungsstellen 5, 6 erstmals, so daß sie dort durch Einwirkung von Laserlicht verlötet werden können. Beispielhaft sind verschiedene Einwirkrichtungen von Laserstrahlen 8a, 8b dargestellt. Die Laser 7a, 7b, selbst können an geeigneter Stelle außerhalb der Wickelvorrichtung untergebracht werden, da sich die Laserstrahlen durch geeignete optische Mittel umlenken lassen. Wie dargestellt, können die Laserstrahlen, entweder aus der Zulaufrichtung der Blechstreifen 2, 3 oder aber auch in Richtung auf die Stirnseiten des Katalysator-Trägerkörpers 1 einwirken. Dabei sind verschiedene Winkel und Richtungen möglich, je nach der Ausdehnung der beloteten und zu verlötenden Bereiche. Im allgemeinen werden 2 oder 4 Laserstrahlen benötigt, je nachdem welche Anordnung gewählt wird.

Figur 2 zeigt schematisch einen kleinen vergrößerten Ausschnitt aus der Stirnfläche eines Katalysator-Trägerkörpers ausgewellten 2 und glatten 3 Blechen. Ein solcher Katalysator-Trägerkörper weist dementsprechend eine Vielzahl von Kanälen 10 auf. Um die zu verlötenden, beloteten Berührungsstellen 4 mit dem Laserstrahl zu treffen, gibt es verschiedene Möglichkeiten. Sofern keine genaue Justierung des Lasers vorgesehen ist, sollte der Laserstrahl, wie durch den Kreis 11 angedeutet, soweit defokussiert sein, daß er größer als der Abstand der einzelnen Berührungsstellen ist. Überstreicht ein solcher Laserstrahl 11 die Stirnseite eines Katalysator-Trägerkörpers, so trifft er jedenfalls in jeder Stellung auf zu verlötende Berührungspunkte. Sofern eine höhere Zielgenauigkeit erreicht werden kann, kann der Durchmesser des Laserstrahles wie durch den kleinen Kreis 12 angedeutet auch sehr klein gemacht werden, so daß jeweils nur dann ein Lötvorgang stattfindet, wenn der Laserstrahl 12 genau eine zu verlötende Stelle 4 trifft.

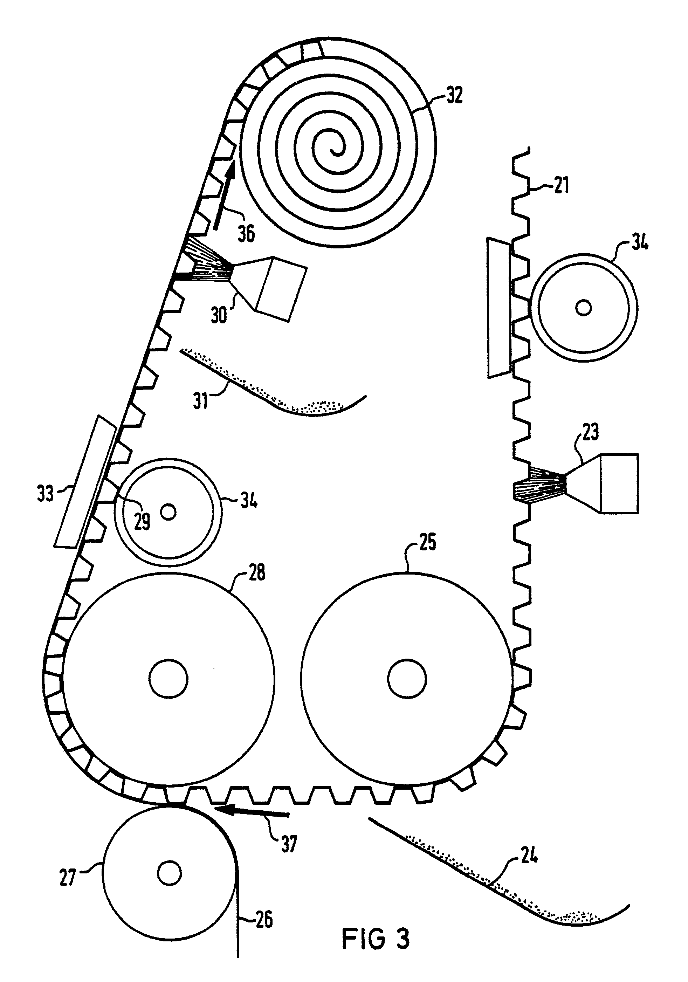

In Figur 3 ist nochmals eine schematische Übersicht über einen Wickelvorgang einschließlich Belastung dargestellt. Ein trapezförmig gewelltes Blech 21 durchläuft zunächst eine Klebstoffauftragstation 22 und dann eine Sprühvorrichtung 23, wonach das zuviel aufgesprühte Lötpulver in eine Sammelvorrichtung 24 fällt, die unterhalb einer Umlenkrolle 25 angeordnet ist. Danach wird ein weiteres ebenes Blechband 26 über eine Umlenkrolle 27 zugeführt und gemeinsam mit dem gewellten Blechband 21 über eine Umlenkrolle 28 durch eine zweite Klebstoffauftragstation 29 geleitet und anschließend von einer weiteren Sprühvorrichtung 30 mit Lötpulver beschichtet, unter der eine weitere Sammelvorrichtung 31 angeordnet ist, die das zuviel aufgesprühte Lötpulver aufnimmt. Danach werden das gewellte Blechband 21 und das ebene Blechband 26 zusammen zu einem Katalysator-Trägerkörper aufgewickelt. Bei dieser Vorrichtung können an den durch Pfeile 36, 37 angedeuteten Stellen, wo sich die beiden Blechstreifen erstmals berühren, durch Einwirkung von Laserstrahlen Lötverbindungen hergestellt werden.

## Patentansprüche

1. Verfahren zur Herstellung von wabenförmigen, gelöteten metallischen Katalysator-Trägerkörpern (1) aus abwechselnd lagenweise gewickelten oder geschichteten dünnen, zumindest teilweise strukturierten Blechen (2), gekennzeichnet durch folgende Merkmale:
   a) Es werden Lötverbindungen bei Normalatmosphäre durch Aufheizen der zu verlötenden Bereiche (5, 6) mittels Laserstrahlen (8b) hergestellt;
   b) Die Laserstrahlen (8b) werden defokussiert (11) auf etwas mehr als die Wabenhöhe des Katalysator-Trägerkörpers (1);
   c) Die Laserstrahlen (8b) werden unter einem Winkel auf die Stirnseiten des Katalysator-Trägerkörpers (1) gerichtet, wodurch die Tiefe der aufzuheizenden Bereiche eingestellt werden kann.

2. Verfahren nach Anspruch 1, dadurch gekennzeichnet, daß der Katalysator-Trägerkörper (1) in an sich bekannter Weise vor dem Wickeln bzw. Schichten belotet und danach gelötet wird, wobei jeweils nur eine oder wenige Berührungsstelle(n) (5, 6) gleichzeitig gelötet wird (bzw. werden).

3. Verfahren nach Anspruch 1, dadurch gekennzeichnet, daß der Katalysator-Trägerkörper (1) in an sich bekannter Weise nach dem Wickeln oder Schichten an einer oder mehreren Außenseiten, gegebenenfalls selektiv, belotet und anschließend mittels Laserstrahlen (8b) verlötet wird.

4. Verfahren nach einem der vorhergehenden Ansprüche, dadurch gekennzeichnet, daß die Laserstrahlen (8b) und der Katalysator-Trägerkörper (1) beim Löten relativ zueinander bewegt werden, so daß die Laserstrahlen (8b) zumindest Teilbereiche der Außenseiten und/oder Stirnflächen des Katalysator-Trägerkörpers (1) überstreichen.

## Claims

1. Method for the production of honeycomb-like brazed metal catalyst support bodies (1) from thin, at least partly structured metal sheets (2) which are wound or laminated in alternating layers, characterised by the following features:
   a) Brazed joints are produced at standard atmosphere, by heating the areas (5, 6) to be brazed by means of laser beams (8b);
   b) The laser beams (8b) are defocused (11) at a height somewhat greater than that of one cell of the honeycomb of the catalyst support body (1);
   c) The laser beams (8b) are directed, at an angle, at the end faces of the catalyst support body (1), by which means the depth of the areas to be heated can be set.

2. Method according to claim 2, characterised in that catalyst support body (1) is provided with brazing powder, in a manner known per se, before the winding or laminating takes place, and after this subsequently brazed, whereby, only one contact point or a few contact point or a few contact points (5, 6) in each case being brazed at the same time.

3. Method according to claim 1, characterised in that, after the winding or laminating has taken place, the catalyst support body (1) is, in a manner known per se, provided with brazing powder on one or more of its outer sides, selectively if necessary, and subsequently brazed by means of laser beams (8b).

4. Method according to one of the preceding claims, characterised in that during brazing the laser beams (8b) and the catalyst support body (1) are moved, relative to each other, so that the laser beams (8b) sweep across at least parts of the outer sides and/or end faces of the catalyst support body (1).

## Revendications

1. Procédé de fabrication de corps de support métalliques pour catalyseurs (1), en forme de nid d'abeille, soudés et constitués de tôles (2) minces, au moins partiellement structurées et, enroulées ou empilées en couches alternées, caractérisé en ce qu'il consiste:

a) à réaliser des liaisons soudées en atmosphère normale par chauffage des régions à souder (5, 6) au moyen de faisceaux laser (8b);

b) à défocaliser les faisceaux laser (8b) d'un peu plus que la hauteur du nid d'abeille du corps de support pour catalyseur (1);

c) à diriger les faisceaux laser (8b) sur les faces frontales du corps de support pour catalyseur (1) sous un angle permettant de régler la profondeur des régions chauffées.

2. Procédé suivant la revendication 1, caractérisé en ce qu'il consiste à revêtir de soudure le corps de support pour catalyseur (1), d'une manière connue en soi, avant l'enroulement ou l'empilage et ensuite à le souder, seulement un ou quelques emplacements de contact (5, 6) étant soudés simultanément.

3. Procédé suivant la revendication 1, caractérisé en ce qu'il consiste à revêtir de soudure, le cas échéant sélectivement, un des côtés extérieurs ou plusieurs des côtés extérieurs du corps de support pour catalyseur (1), d'une manière en soi connue, après l'enroulement ou l'empilage et ensuite a le souder au moyen de faisceaux laser (8b).

4. Procédé suivant l'une des revendications précédentes, caractérisé en ce qu'il consiste à déplacer un par rapport à l'autre, lors du soudage, les faisceaux laser (8b) et le corps de support pour catalyseur (1), de sorte que les faisceaux laser (8b) balaient au moins des régions partielles des côtés extérieurs et/ou des surfaces frontales du corps de support pour catalyseur (1).

EP 0 223 058 B1

FIG 1

FIG 2

FIG 3